# EUROPÄISCHE PATENTSCHRIFT

(11) **EP 2 686 212 B1**
(45) Veröffentlichungstag und Bekanntmachung des Hinweises auf die Patenterteilung: **31.08.2016**
(21) Anmeldenummer: 12706485.5
(22) Anmeldetag: 25.02.2012
(51) Int. Cl.: B60R 22/20

(54) **HÖHENVERSTELLER FÜR EINEN BEFESTIGUNGSBESCHLAG EINES SICHERHEITSGURT-SYSTEMS**
HEIGHT ADJUSTER FOR A FASTENING FITTING OF A SAFETY BELT SYSTEM
DISPOSITIF DE RÉGLAGE EN HAUTEUR POUR UNE FERRURE DE FIXATION D'UN SYSTÈME DE CEINTURE DE SÉCURITÉ

(30) Priorität: 16.03.2011 DE 102011014175
(43) Veröffentlichungstag der Anmeldung: 22.01.2014
(73) Patentinhaber: Autoliv Development AB, 447 83 Vårgårda (SE)
(72) Erfinder: NEERO, Peeter, 74020 Viimsi (EE); KEES, Aivo, 10620 Tallinn (EE); MELNIKOVA, Larissa, 12911 Tallinn (EE)
(74) Vertreter: Müller Verweyen
(86) Internationale Anmeldenummer: PCT/EP2012/000857
(87) Internationale Veröffentlichungsnummer: WO 2012/123068

(56) Entgegenhaltungen:
- EP-A1- 0 685 373
- EP-A2- 0 800 968
- DE-A1- 4 308 366
- DE-A1-102008 052 850

## Beschreibung

Die Erfindung betrifft einen Höhenversteller für einen Befestigungsbeschlag eines Sicherheitsgurt-Systems mit den Merkmalen des Oberbegriffs von Anspruch 1.

Ein gattungsgemäßer Höhenversteller ist beispielsweise aus der DE 10 2008 052 850 A1 bekannt. Der Höhenversteller weist eine Profilschiene mit einem Boden und zwei von den Rändern des Bodens hochstehenden Seitenwänden auf, die an ihren freien Rändern wiederum auf den Boden hin gerichtet umgebogen sind. Die Profilschiene weist damit ein im Querschnitt C-förmiges Profil auf, das durch die umgebogenen Ränder verengt ist. Ferner ist ein in der Profilschiene verschiebbares Gleitstück mit einer Befestigungsbohrung für ein Beschlagteil vorgesehen, welches durch die umgebogenen Ränder in Zugrichtung eines zwischen dem Befestigungsbeschlag und dem Gleitstück vorgesehenen Befestigungsmittels an der Profilschiene festgelegt ist. In den Seitenwänden der Profilschiene ist eine Rastkontur in Form von regelmäßig beabstandet angeordneten Fenstern vorgesehen, welche eine Festlegung des Gleitstückes und damit des Beschlagteils in verschiedenen Höhen ermöglicht. Zur Festlegung des Gleitstückes gegenüber der Profilschiene sind an dem Gleitstück zwei beidseitig abragende Sperrelemente vorgesehen, welche in einer Ruhestellung formschlüssig in die Fenster eingreifen und dadurch das Gleitstück verschiebefest festlegen. Ferner ist ein mittels einer Schraube an dem Gleitstück gesichertes Betätigungselement vorgesehen, welches bei einer Betätigung die Sperrelemente aus der Verriegelungsstellung verdrängt, so dass diese nicht mehr in die Fenster eingreifen, und das Gleitstück mit dem daran befestigten Beschlagteil anschließend gegenüber der fahrzeugfesten Profilschiene verschoben werden kann. Damit beide Sperrelemente gleichzeitig entriegelt werden können, ist ein Betätigungselement vorgesehen, welches zwischen die symmetrisch angeordneten Sperrelemente hineinragt und bei einer Betätigung an beiden Seiten zur Anlage an jeweils einem der Sperrelemente gelangt.

Die Sperrelemente sind auf einem Lagerflansch des Gleitstückes übereinander gelagert, wodurch die Bauhöhe des Gleitstückes mit den Sperrelementen und der dafür erforderliche Bauraum vergrößert werden. Infolgedessen weist auch der Höhenversteller selbst eine größere Bauhöhe auf, so dass zwischen der Befestigungsstelle an der Fahrzeugstruktur und der diese abdeckende Innenverkleidung ebenfalls ein entsprechend großer Freiraum vorgesehen werden muss. Sofern der Freiraum an der Befestigungsstelle jedoch begrenzt ist, kann die Befestigung eines derartigen Höhenverstellers am Kraftfahrzeug Probleme bereiten.

Aus der DE 43 08 366 A1 ist ein Höhenversteller für ein Beschlagteil eines Sicherheitsgurtes bekannt. Anstelle einer Torsions- oder Schenkelfeder werden die Sperrklinken bei diesem Höhenversteller über eine indirekt über einen Anschlag wirkende Schraubenfeder federbelastet.

Aus der EP 0 685 373 A1 ist ein Höherversteller für ein Beschlagteil eines Sicherheitsgurtes mit den Merkmalen des Oberbegriffs des Anspruchs 1 bekannt.

Aufgabe der Erfindung ist es, einen Höhenversteller der gattungsgemäßen Art mit einer möglichst geringen Bauhöhe bereitzustellen.

Zur Lösung der Aufgabe wird ein Höhenversteller mit den Merkmalen von Anspruch 1 vorgeschlagen. Weitere bevorzugte Weiterentwicklungen der Erfindung sind den Unteransprüchen, den Figuren und der zugehörigen Beschreibung zu entnehmen.

Gemäß dem Grundgedanken der Erfindung wird vorgeschlagen, dass die Feder durch eine Torsions- oder Schenkelfeder mit zwei radial abragenden Schenkeln gebildet ist, wobei die Torsions- oder Schenkelfeder mit mindestens einem Schenkel an der mindestens einen Sperrklinke anliegt.

Weiter wird vorgeschlagen, dass das Gleitstück vorzugsweise plattenförmig mit einer Dicke D1 im Bereich der Ausnehmung ausgebildet ist und die Sperrklinke plattenförmig mit einer Dicke D2 bemessen ist, welche gleich oder kleiner als die Dicke D1 ist. Durch die vorgeschlagene Bemessung des Sperrelements kann dieses vollständig innerhalb der äußeren Abmaße des Gleitstückes angeordnet werden, so dass es die Bauhöhe zumindest nicht erhöht.

Vorzugsweise ist die Sperrklinke schwenkbar in der Ausnehmung gelagert. Aufgrund der Realisierung des Schwenklagers in der Ausnehmung und damit in der Ebene des Gleitstücks bzw. der Profilschiene wird die Bauhöhe durch das Schwenklager nicht vergrößert. Das Schwenklager kann vorzugsweise dadurch realisiert werden, dass die Sperrklinke einen Lagerzapfen und die Ausnehmung eine verengte Lagerstelle aufweist, wobei die Sperrklinke mit dem Lagerzapfen in der Lagerstelle schwenkbar gelagert ist. Der aus dem Stand der Technik bekannte, aus der Ebene des Gleitstücks bzw. der Profilschiene herausragende Lagerflansch ist dann entbehrlich.

Die Erfindung wird im Folgenden anhand bevorzugter Ausführungsformen unter Bezugnahme auf die beigefügten Figuren erläutert. Dabei zeigt:
- Fig. 1: eine perspektivische Explosionsdarstellung eines Höhenverstellers;
- Fig. 2: eine perspektivische Ansicht eines Höhenverstellers im entriegelten Zustand;
- Fig. 3: eine perspektivische Ansicht eines Höhenverstellers im verriegelten Zustand;
- Fig. 4: eine Detail-Querschnittsansicht eines Höhenverstellers im Bereich der Verriegelungseinrichtung im entriegelten Zustand;
- Fig. 5: eine Detail-Querschnittsansicht eines Höhenverstellers im Bereich der Verriegelungseinrichtung im verriegelten Zustand; und
- Fig. 6: eine Querschnittsansicht eines Gleitstücks in einem Ausschnitt.

Der Höhenversteller 1 umfasst eine im Querschnitt U- oder C-förmige Profilschiene 2 mit einem Boden 22 und seitlich vorstehenden, gegenüberliegenden Seitenwänden 11, 12. In den Seitenwänden 11, 12 ist jeweils eine Rastkontur 14, 15 insbesondere in Form von Rastfenstern vorgesehen. Der Höhenversteller 1 umfasst des Weiteren einen in der Profilschiene 2 verschiebbar geführten Schlitten 33, der insbesondere ein Gleitstück 16, ein Steuerelement 3 und ein Führungselement 9 umfasst. Gleitstück 16, Steuerelement 3 und/oder Führungselement 9 sind vorzugsweise im Wesentlichen plattenförmig. Die Profilschiene 2 weist geeignete Elemente 18, 40 zur Befestigung der Profilschiene 2 an der Fahrzeugstruktur, beispielsweise an der B-Säule auf. Durch das vorteilhafte Befestigungselement 40 wird eine zusätzliche Anbindung in der Mitte der Profilschiene 2 möglich.

Das Führungselement 9 ist verschiebbar in der Profilschiene 2 geführt. Zu diesem Zweck sind zwischen der Profilschiene 2 und dem Führungselement 9 wirkende Führungsmittel vorgesehen. Die Führungsmittel werden in der vorliegenden Ausführungsform durch an den Längsseiten des Führungselements 9 vorgesehene U-Profile 34 und an den Seitenwänden 11, 12 der Profilschiene 2 vorgesehene, vorzugsweise parallel zum Boden 22 verlaufende und in die U-Profile 24 eingreifende Schenkel 17 gebildet. Das Führungselement 9 kann beispielsweise eine oder mehrere Bohrungen 36 zur Befestigung eines Beschlagteils eines Sicherheitsgurtes, beispielsweise eines Gurtumlenkers, aufweisen. Eine insbesondere zwischen der Profilschiene 2 und dem Führungselement 9 wirkende Feder 10 übt eine dem Gewicht des Schlittens 33 und des daran befestigten Gurtteils entgegengerichtete Kraft auf den Schlitten 33 aus, um eine Verschiebung des Schlittens 33 für den Insassen zu erleichtern.

Das Gleitstück 16 umfasst eine Verriegelungseinrichtung in Form von Verriegelungselementen 4, 5 zur beidseitigen Verriegelung des Gleitstücks 16 in den Rastkonturen 14, 15 der Seitenwände 11, 12 der Profilschiene 2, wie im Folgenden genauer erläutert wird. Das Gleitstück 16 ist vorzugsweise ein separates Bauteil, das mit dem Führungselement 19 beispielsweise mittels eines in eine Öffnung 25 des Führungselements 9 eingreifenden Flansches 46, oder mit anderen geeigneten Mitteln, verschiebefest verbunden ist. Das Gleitstück 16 ist vorzugsweise zwischen dem Führungselement 9 und dem Boden 22 der Profilschiene 2 angeordnet. In einer nicht gezeigten Ausführungsform können Führungselement 19 und Gleitstück 16 auch einstückig gebildet sein.

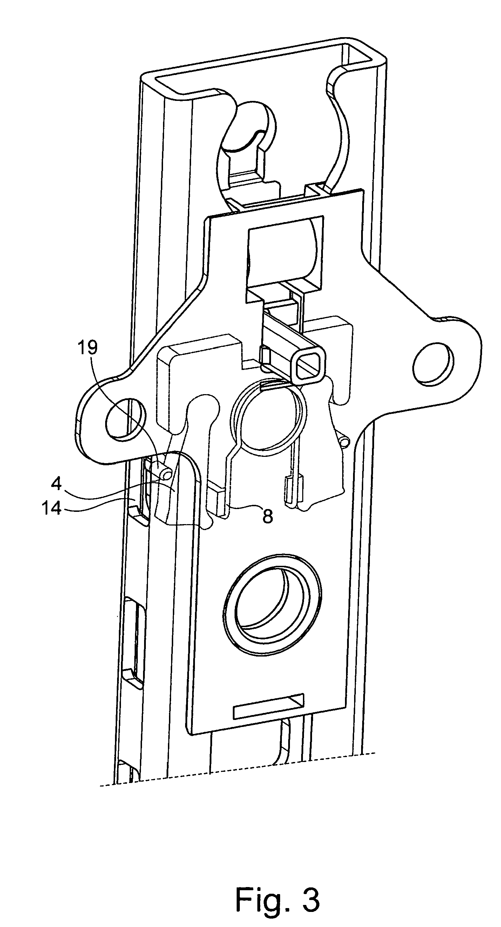

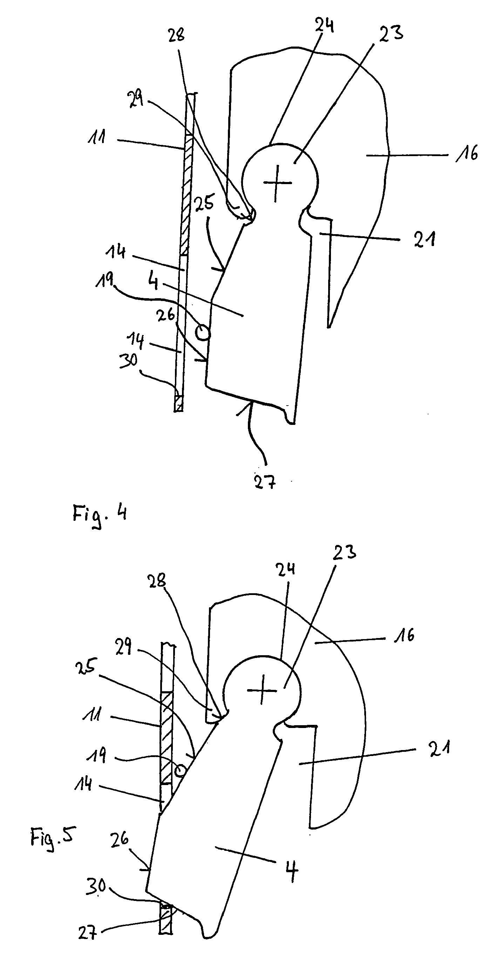

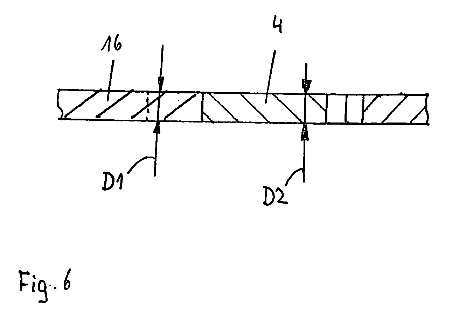

Die Verriegelungselemente 4, 5 sind insbesondere als Sperrklinken ausgeführt. Die Sperrklinken 4, 5 sind vorteilhafterweise in der Ebene des Gleitstücks 16 angeordnet und in der entriegelten Stellung gemäß den Figuren 3 und 4 in entsprechenden seitlichen Ausnehmungen 21 an den Randseiten des Gleitstücks aufgenommen. In diesem Zustand ist der Schlitten 33, und mit diesem der Gurtbeschlag, frei entlang der Profilschiene 2 verschiebbar. Wie aus Figur 6 ersichtlich, ist die Dicke D2 der insbesondere plattenförmigen Sperrklinken 4, 5 kleiner oder gleich der Dicke D1 des insbesondere plattenförmigen Gleitstücks 16, wodurch die Bauhöhe vorteilhaft minimiert werden kann.

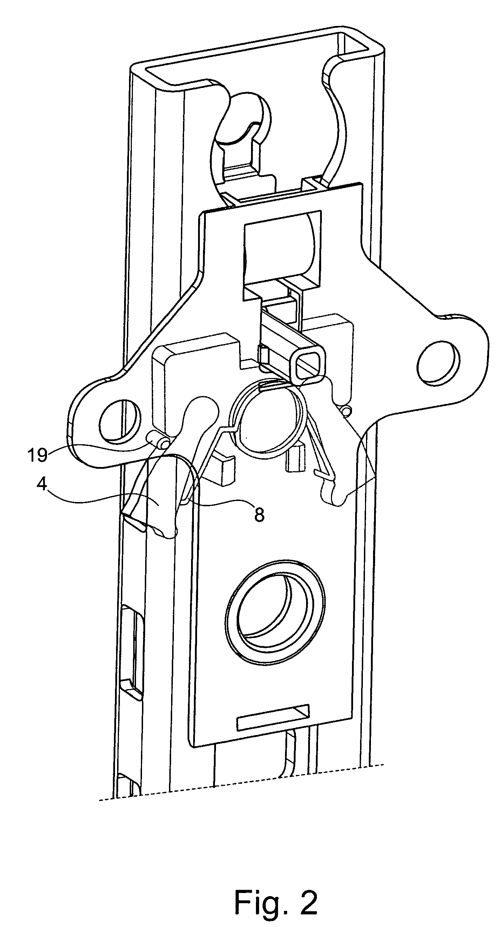

Die Sperrklinken 4, 5 sind relativ zu dem Gleitstück 16 zwischen der entriegelten Stellung gemäß den Figuren 3 und 4 und der Verriegelungsstellung gemäß den Figuren 2 und 5 verschwenkbar. Zu diesem Zweck umfasst jede Sperrklinke 4, 5 vorzugsweise einen Lagerzapfen 23, der in einer entsprechenden verengten Lagerstelle 24 der jeweiligen Ausnehmung 21 des Gleitstücks schwenkbar gelagert ist.

Die Sperrklinken 4, 5 sind mittels einer Feder 6 in Richtung der Verriegelungsstellung vorgespannt. Die Feder 6 ist vorzugsweise als Torsions- bzw. Schenkelfeder 6 ausgeführt, die um ihre Achse auf Torsion beansprucht wird und zwei radial abragende Schenkel 7, 8 aufweist, die jeweils an einer Sperrklinke 4, 5 anliegen. Aufgrund der Feder 6 befinden sich die Sperrklinken 4, 5 normalerweise im verriegelten Zustand, in dem die Sperrklinken 4, 5 in die in den Seitenwänden 11, 12 der Profilschiene 2 vorgesehenen Fenster 14, 15 eingreift und eine ungewollte Verschiebung des Schlittens 33 unterbindet, so dass der an dem Schlitten 23 befestigte Gurtbeschlag während der Fahrt jederzeit eine definierte vertikale Position einnimmt. In der Verriegelungsstellung gelangen vorteilhaft die Sperrklinken 4, 5 mit einer entsprechenden Oberfläche 28 kraftübertragend an einem Rand 29 der jeweiligen Ausnehmung 21 zur Anlage. Des Weiteren können die Sperrklinken 4, 5 eine Oberfläche 27 aufweisen, die in der Verriegelungsstellung an einer Kante 30 des entsprechenden Rastfensters 14 anschlägt.

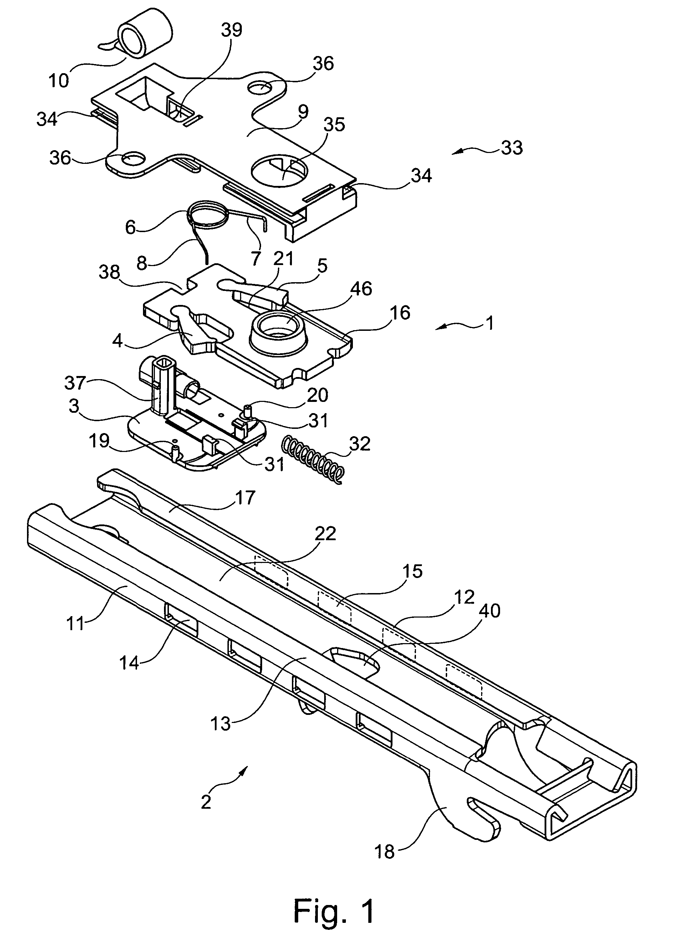

Das Steuerelement 3 dient zur Steuerung bzw. Entriegelung der Verriegelungseinrichtung infolge einer Betätigung durch einen Insassen. Zu diesem Zweck ist das Steuerelement 3 relativ zu dem Gleitstück 16 verschiebbar geführt, beispielsweise mittels hakenförmigen Elementen 31, die entlang der Innenseite der Ausnehmungen 21 geführt sind, siehe Figur 1. Das Steuerelement 3 weist ein beispielsweise stiftförmiges Betätigungselement 37 auf, das vorzugsweise einstückig mit dem Steuerelement 3 gebildet ist. Das Steuerelement 3 ist mittels einer Druckfeder 32 gegen das Gleitstück 16 in Richtung der Verriegelungsstellung vorgespannt, um eine unbeabsichtigte Verschiebung des Schlittens 23 zu verhindern.

An dem Steuerelement 3 sind des Weiteren Vorsprünge 19, 20 vorgesehen, die mit entsprechenden, zu der Verschiebungsrichtung des Steuerelements 3 schrägen Anlageflächen 25 zusammenwirken. Infolge einer Verschiebung des Steuerelements 3 durch Betätigung des Betätigungselements 37 gegen die Kraft der Druckfeder 32 werden somit durch die Vorsprünge 19, 20 die Sperrklinken 4, 5 gegen die Kraft der Schenkelfeder 6 in die Ausnehmungen 21 verdrängt und außer Eingriff mit den Rastfenstern 14, 15 gebracht und somit in die entriegelte Stellung verschwenkt. Die Sperrklinken 4, 5 weisen vorzugsweise jeweils eine Oberfläche 26 auf, die in der entriegelten Stellung etwa parallel zu der Verschiebungsrichtung des Steuerelements 3 verläuft, so dass bei weiterer Verschiebung des Steuerelements 3 keine weitere Verschwenkung der Sperrklinken 4, 5 erfolgt.

Das Steuerelement 3 ist vorzugsweise zwischen dem Gleitstück 16 und dem Boden 22 der Profilschiene 2 angeordnet. Des Weiteren sind das Steuerelement 3 und das Gleitstück 16 vorteilhafterweise zwischen dem Boden 22 der Profilschiene 2 und dem Führungselement 9 angeordnet. Aufgrund dieser bevorzugten innenliegenden Anordnung des Steuerelements 3 ist eine Sicherung des Steuerelements 3 an dem Gleitstück 16 beispielsweise mittels einer Schraube, wie aus dem Stand der Technik bekannt, entbehrlich. Das Steuerelement 3 und/oder das Führungselement 9 weist vorzugsweise entsprechende Durchführöffnungen 38, 39 für das Betätigungselement 37 auf, um eine Durchführung des Betätigungselements 37 nach außen und somit eine Betätigbarkeit durch den Insassen zu ermöglichen. Insbesondere die Durchführöffnung 39 des Führungselements 9 ist im Hinblick auf die zuvor beschriebene Verschiebbarkeit des Steuerelements 3 relativ zu dem Führungselement 9 zweckmäßigerweise als Langloch ausgeführt.

In den obigen Ausführungsbeispielen ist eine vorteilhafte beidseitige Verriegelung des Gleitstücks 16 mittels zweier Sperrklinken 4, 5, die in jeweils einer Ausnehmung 21 angeordnet sind, beschrieben. Es ist aber auch eine einseitig verriegelnde Verriegelungseinrichtung mit insbesondere nur einer Sperrklinke 4, die in einer Ausnehmung 21 angeordnet ist, möglich.

## Patentansprüche

1. Höhenversteller (1) für ein Beschlagteil eines Sicherheitsgurtes für ein Kraftfahrzeug mit:
- einer Profilschiene (2) mit einem Boden (22) und Seitenwänden (11, 12), wobei in mindestens einer Seitenwand (11, 12) eine Rastkontur (14, 15) vorgesehen ist,
- einem entlang der Profilschiene (2) verschiebbaren Gleitstück (16), welches eine Verriegelungseinrichtung zur Verriegelung des Gleitstückes (16) in der Rastkontur (14, 15) aufweist, und
- einem Steuerelement (3) zur Entriegelung der Verriegelungseinrichtung, wobei
- an einer Randseite des Gleitstückes (16) mindestens eine Ausnehmung (21) vorgesehen ist, und
- die Verriegelungseinrichtung durch mindestens eine in der Ausnehmung (21) angeordnete Sperrklinke (4, 5) gebildet ist, wobei
- die Sperrklinke (4, 5) mittels einer Feder (6) in Richtung der Verriegelungsstellung vorgespannt ist, wobei
- die Feder (6) durch eine Torsions- oder Schenkelfeder mit zwei radial abragenden Schenkeln (7, 8) gebildet ist, wobei die Torsions- oder Schenkelfeder (6) mit mindestens einem Schenkel (7, 8) an der mindestens einen Sperrklinke (4, 5) anliegt,
**dadurch gekennzeichnet, dass**
- das Steuerelement (3) mit einem Vorsprung (19, 20) an der Sperrklinke (4, 5) anliegt und bei einer Betätigung die Sperrklinke (4,5) mittels des Vorsprungs (19, 20) in die Ausnehmung (21) verdrängt und außer Eingriff mit dem Rastfenster (14,15) in die entriegelte Stellung verschwenkt.

2. Höhenversteller (1) nach Anspruch 1, **dadurch gekennzeichnet, dass**
- das Gleitstück (16) plattenförmig mit einer Dicke D1 im Bereich der Ausnehmung (21) ausgebildet ist, und
- die Sperrklinke (4, 5) plattenförmig mit einer Dicke D2 bemessen ist, welche gleich oder kleiner als die Dicke D1 ist.

3. Höhenversteller (1) nach einem der vorangehenden Ansprüche, **dadurch gekennzeichnet, dass**
- die Sperrklinke (4, 5) schwenkbar in den Ausnehmungen (21) gelagert ist.

4. Höhenversteller (1) nach Anspruch 3, **dadurch gekennzeichnet, dass**
- die Sperrklinke (4, 5) einen Lagerzapfen (23) und die Ausnehmung (21) eine verengte Lagerstelle (24) aufweist, und
- die Sperrklinke (4, 5) mit dem Lagerzapfen (23) in der Lagerstelle (24) schwenkbar gelagert ist.

5. Höhenversteller (1) nach Anspruch 1, **dadurch gekennzeichnet, dass**
- die Sperrklinke (4, 5) an der Außenseite eine schräg zu der Verschiebungsrichtung des Steuerelements (3) gerichtete Anlagefläche (25) aufweist, an der das Steuerelement (3) mit dem Vorsprung (19, 20) während der Verschiebung des Steuerelements (3) relativ zu dem Gleitstück (16) anliegt.

6. Höhenversteller (1) nach einem der vorangehenden Ansprüche, **dadurch gekennzeichnet, dass**
- das Steuerelement (3) zwischen dem Boden (22) der Profilschiene (2) und dem Gleitstück (16) angeordnet ist.

7. Höhenversteller (1) nach einem der vorangehenden Ansprüche, **dadurch gekennzeichnet, dass**
- das Steuerelement (3) und das Gleitstück (16) zwischen dem Boden (22) der Profilschiene (2) und einem entlang der Profilschiene (2) verschiebbar geführten Führungselement (9) angeordnet sind.

8. Höhenversteller (1) nach einem der vorangehenden Ansprüche, **dadurch gekennzeichnet, dass**
- die Sperrklinke (4, 5) in der Verriegelungsstellung kraftübertragend an einem Rand (29) der Ausnehmung (21) zur Anlage gelangt.

9. Höhenversteller nach einem der vorangehenden Ansprüche, **dadurch gekennzeichnet, dass**
- in beiden Seitenwänden (11, 12) jeweils eine Rastkontur (14, 15) vorgesehen ist,
- an Randseiten des Gleitstücks wenigstens zwei Ausnehmungen (21) vorgesehen sind, und
- die Verriegelungseinrichtung zur beidseitigen Verriegelung des Gleitstücks (16) durch wenigstens zwei in den Ausnehmungen angeordnete Sperrklinken (4, 5) gebildet wird.

## Claims

1. Height adjuster (1) for a fitting part of a seatbelt for a motor vehicle including:
- a profile rail (2) including a base (22) and lateral walls (11, 12), wherein a latch contour (14, 15) is provided in at least one lateral wall (11, 12),
- a slide piece (16) displaceable along the profile rail (2), which slide piece (16) includes a locking device for locking the slide piece (16) in the latch contour (14, 15), and
- a control element (3) for unlocking the locking device, wherein
- at least one opening (21) is provided on an edge side of the slide piece (16), and
- the locking device is formed by at least one ratchet (4, 5) disposed in the opening, wherein
- the ratchet (4, 5) is preloaded by a spring (6) towards the locking position, wherein
- the spring (6) is formed by a torsion- or leg-spring including two radially projecting legs (7, 8), wherein the torsion- or leg-spring (6) abuts with at least one leg (7, 8) on the at least one ratchet (4, 5),
**characterised in that**
- the control element (3) abuts with a projection (19, 20) on the ratchet (4, 5), and upon an actuation displaces into the opening (21) using the projection (19, 20) and pivots out of engagement with the locking gate (14, 15) into the unlocked position.

2. Height adjuster (1) according to claim 1, **characterised in that**
- the slide piece (16) is formed plate shaped with a thickness D1 in the region of the opening (21), and
- the ratchet (4, 5) is dimensioned plate shaped with a thickness D2, which is the same or smaller than the thickness D1.

3. Height adjuster (1) according to one of the preceding claims, **characterised in that**
- the ratchet (4, 5) is pivotably supported in the openings (21).

4. Height adjuster (1) according to claim 3, **characterised in that**
- the ratchet (4, 5) includes a bearing journal (23) and the opening (21) a narrowed bearing position (24), and
- the ratchet (4, 5) is pivotably supported in the bearing position (24) with the bearing journal (23).

5. Height adjuster (1) according to claim 1, **characterised in that**
- the ratchet (4, 5) includes an abutment surface (25) on the outside, oriented oblique to the displacement direction of the control element (3), on which the control element (3) abuts with the projection (19, 20) during the displacing of the control element (3) relative to the slide piece (16).

6. Height adjuster (1) according to one of the preceding claims, **characterised in that**
- the control element (3) is disposed between the base (22) of the profile track (2) and the slide piece (16).

7. Height adjuster (1) according to one of the preceding claims, **characterised in that**
- the control element (3) and the slide piece (16) are disposed between the base (22) of the profile rail (2) and a guide element (9) displaceably guided along the profile rail (2).

8. Height adjuster (1) according to one of the preceding claims, **characterised in that**
- in the locking position the ratchet (4, 5) reaches abutment in a force-transmitting manner on an edge (29) of the opening (21).

9. Height adjuster according to one of the preceding claims, **characterised in that**
- a latch contour (14, 15) is disposed in each of the two lateral walls (11, 12),
- at least two openings (21) are provided on edge sides of the slide piece, and
- the locking device is configured for two-side locking of the slide piece (16) by at least two ratchets (4, 5) disposed in the openings.

## Revendications

1. Dispositif de réglage en hauteur (1) pour une ferrure d'un système de ceinture de sécurité pour un véhicule automobile, comportant :
- un rail profilé (2) doté d'un fond (22) et de parois latérales (11, 12), un contour d'encliquetage (14, 15) étant prévu dans au moins une paroi latérale (11, 12),
- un coulisseau (16) pouvant se déplacer le long du rail profilé (2) et présentant un dispositif de verrouillage permettant de bloquer le coulisseau (16) dans le contour d'encliquetage (14, 15), et
- un élément de commande (3) pour déverrouiller le dispositif de verrouillage, dans lequel
- au moins un évidement (21) est prévu sur un bord du coulisseau (16) et
- le dispositif de verrouillage est formé par au moins un cliquet d'arrêt (4, 5) disposé dans l'évidement (21), dans lequel
- le cliquet d'arrêt (4, 5) est précontraint par un ressort (6) dans le sens de la position de verrouillage, en sachant que
- le ressort (6) est constitué par un ressort de torsion ou à branches comportant deux branches (7, 8) faisant saillie radialement, le ressort de torsion ou à branches (6) étant en contact avec l'au moins un cliquet d'arrêt (4, 5) par au moins une branche (7, 8),
**caractérisé en ce que**
- l'élément de commande (3) est en contact avec le cliquet d'arrêt (4, 5) par une saillie (19, 20) et, lorsqu'il est actionné, il repousse le cliquet d'arrêt (4, 5) dans l'évidement (21) par le biais de la saillie (19, 20) et le fait pivoter dans la position de déverrouillage en le dégageant de la fenêtre d'encliquetage (14, 15).

2. Dispositif de réglage en hauteur (1) selon la revendication 1, **caractérisé en ce que**
- le coulisseau (16) est conçu en forme de plaque avec une épaisseur D1 dans la zone de l'évidement (21), et
- le cliquet d'arrêt (4, 5) est dimensionné en forme de plaque avec une épaisseur D2 inférieure ou égale à l'épaisseur D1.

3. Dispositif de réglage en hauteur (1) selon l'une quelconque des revendications précédentes, **caractérisé en ce que**
- le cliquet d'arrêt (4, 5) est installé de manière à pouvoir pivoter dans les évidements (21).

4. Dispositif de réglage en hauteur (1) selon la revendication 3, **caractérisé en ce que**
- le cliquet d'arrêt (4, 5) présente un tourillon (23) et l'évidement (21) un point d'appui (24) resserré, et
- le cliquet d'arrêt (4, 5), grâce au tourillon (23), est installé de manière à pouvoir pivoter dans le point d'appui (24).

5. Dispositif de réglage en hauteur (1) selon la revendication 1, **caractérisé en ce que**
- le cliquet d'arrêt (4, 5) présente, sur le côté extérieur, une surface d'appui (25) en biais par rapport à la direction de déplacement de l'élément de commande (3) et avec laquelle l'élément de commande (3) est en contact par la saillie (19, 20) pendant le déplacement de l'élément de commande (3) par rapport au coulisseau (16).

6. Dispositif de réglage en hauteur (1) selon l'une quelconque des revendications précédentes, **caractérisé en ce que**
- l'élément de commande (3) est disposé entre le fond (22) du rail profilé (2) et le coulisseau (16).

7. Dispositif de réglage en hauteur (1) selon l'une quelconque des revendications précédentes, **caractérisé en ce que**
- l'élément de commande (3) et le coulisseau (16) sont disposés entre le fond (22) du rail profilé (2) et un élément de guidage (9) guidé de manière mobile le long du rail profilé (2).

8. Dispositif de réglage en hauteur (1) selon l'une quelconque des revendications précédentes, **caractérisé en ce que**
- le cliquet d'arrêt (4, 5), en position de verrouillage, vient buter contre un bord (29) de l'évidement (21) de manière à transmettre les forces.

9. Dispositif de réglage en hauteur selon l'une quelconque des revendications précédentes, **caractérisé en ce que**
- un contour d'encliquetage (14, 15) est respectivement prévu dans les deux parois latérales (11, 12),
- au moins deux évidements (21) sont prévus sur les bords du coulisseau, et
- le dispositif de verrouillage est constitué par au moins deux cliquets d'arrêt (4, 5) disposés dans les évidements pour permettre le verrouillage du coulisseau (16) des deux côtés.
